(19) Europäisches Patentamt
European Patent Office
Office européen des brevets

(11) EP 0 860 399 B1

(12) **EUROPÄISCHE PATENTSCHRIFT**

(45) Veröffentlichungstag und Bekanntmachung des Hinweises auf die Patenterteilung:
**04.04.2001 Patentblatt 2001/14**

(51) Int Cl.[7]: **C01B 33/38**, C11D 3/12

(21) Anmeldenummer: **98101142.2**

(22) Anmeldetag: **23.01.1998**

(54) **Verfahren zur Herstellung von kristallinen Natriumsilikaten**

Method of preparing crystalline sodium silicates

Méthode de préparation de silicates de sodium cristallins

(84) Benannte Vertragsstaaten:
**DE FR GB IT**

(30) Priorität: **25.02.1997 DE 19707449**

(43) Veröffentlichungstag der Anmeldung:
**26.08.1998 Patentblatt 1998/35**

(73) Patentinhaber: **Clariant GmbH**
**65929 Frankfurt am Main (DE)**

(72) Erfinder:
- **Holz, Josef**
  **50374 Erftstadt (DE)**
- **Schimmel, Günther, Dr.**
  **50374 Erftstadt (DE)**
- **Tapper, Alexander, Dr.**
  **41239 Mönchengladbach (DE)**
- **Thewes, Volker**
  **40789 Monheim (DE)**

(56) Entgegenhaltungen:
**EP-A- 0 205 070** **EP-A- 0 293 640**
**EP-A- 0 425 428**

- **ALEXANDER WILLGALLIS ET AL.: "Zur Polymorphie des Na2Si2O5" GLASTECHNISCHE BERICHTE., April 1964, FRANKFURT DE, Seiten 194-200, XP002066304**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 860 399 B1

## Beschreibung

Die Erfindung betrifft ein Verfahren zur Herstellung von kristallinen Natriumsilikaten mit Schichtstruktur und hohem δ-Phasenanteil aus hydrothermal hergestelltem Wasserglas durch Entwässern des Wasserglases und anschließender Kristallisation bei erhöhter Temperatur.

Kristalline Natriumsilikate mit Schichtstruktur werden als Wasserenthärter und Builder in Wasch- und Reinigungsmitteln eingesetzt. Für diese Einsatzzwecke sind kristalline Natriumsilikate mit Schichtstruktur, insbesondere solche mit einem Molverhältnis von $SiO_2 : Na_2O$ von (1,9 bis 2,1) : 1 geeignet. Diese werden auch als SKS-6-Typen bezeichnet. Je nach Herstell- und Kristallisationsbedingungen existieren von diesem Natriumsilikat mehrere Modifikationen, die als α-, β-, γ- und δ—Phasen bezeichnet werden. Für die obigen Anwendungen ist insbesondere die δ-Modifikation (SKS-6) von Interesse.

Im Stand der Technik sind bereits eine Reihe von Verfahren bekannt, mit denen kristalline Natriumsilikate mit Schichtstruktur hergestellt werden können.

Die EP-B-0 293 640 beschreibt ein Verfahren zur Herstellung von kristallinen Natriumsilikaten mit Schichtstruktur und einem Molverhältnis von $SiO_2 : Na_2O$ von 1,9 : 1 bis 3,5 :1 aus Wasserglaslösung mit einem Feststoffgehalt von 20 bis 65 Gew.-%, bei dem man die Wasserglaslösungen in einer Sprühtrocknungszone unter Bildung eines pulverförmigen amorphen Natriumsilikates mit maximal 20 Gew.-% Glühverlust behandelt, wobei das die Sprühtrocknungszone verlassende Abgas eine Temperatur von mindestens 140 °C aufweist und dann das sprühgetrocknete Natriumsilikat in einer Glühzone mit bewegter Feststoffschicht bei Temperaturen von 500 bis 800 °C 1 bis 60 Minuten in Gegenwart von mindestens 10 Gew.-% eines Rückgutes tempert, das durch mechanische Zerkleinerung von aus der Glühzone herausgetragenem kristallinem Natriumsilikat erhalten wurde. Bei diesem Verfahren ist es von Nachteil, daß ein hoher δ-Phasenanteil bei einem störungsfreien Betrieb nur dann erhalten wird, wenn eine genügend große Menge des Rückgutes wieder eingesetzt wird. Hierdurch wird das Verfahren kompliziert.

Die EP 0 425 428 B1 beschreibt ebenfalls ein Verfahren zur Herstellung von kristallinen Natriumsilikaten mit Schichtstruktur und dem oben genannten Molverhältnis sowie einem Wassergehalt von weniger als 0,3 Gew.-% aus einer Wasserglaslösung mit mindestens 20 Gew.-% Feststoff, bei dem die Wasserglaslösung durch Umsetzung von Quarzsand mit Natronlauge gewonnen wurde, man die Wasserglaslösung in einer Sprühtrocknungszone bei 200 bis 300 °C und einer Verweilzeit von 10 bis 25 Sekunden sowie einer Temperatur des die Sprühtrocknungszone verlassenden Abgases von 90 bis 130 °C unter Bildung eines pulverförmigen Natriumsilikats behandelt, dann wird das obige Natriumsilikat in einem geneigt angeordneten, mit Einrichtung zur Bewegung von Feststoff ausgerüsteten Drehrohrofen eingebracht und mit Rauchgas bei Temperaturen von 500 bis 850 °C für einen Zeitraum von bis zu 60 Minuten im Gegenstrom unter Bildung von kristallinem Natriumsilikat behandelt.

Der Drehrohrofen ist dabei derartig isoliert, daß die Temperatur seiner Außenwand weniger als 60 °C beträgt. Das aus dem Drehrohrofen austretende kristalline Natriumsilikat wird mit Hilfe eines mechanischen Brechers auf Korngrößen von 0,1 bis 12 mm zerkleinert. Das nach diesem Verfahren erhaltene Natriumsilikat liegt hauptsächlich in der δ-Modifikation vor.

Ein Verfahren zur Herstellung von kristallinen Natriumsilikaten mit Schichtstruktur aus Sand und Soda beschreibt die EP-A-0 436 835. Danach werden Sand und Soda in einem Molverhältnis von $SiO_2 : Na_2O$ von 2 bis 3,5 bei Temperaturen von 1200 bis 1400 °C aufgeschmolzen, nach dem Erkalten der Schmelze wird das angefallene stückige Wasserglas auf Korngrößen von weniger als 2 mm aufgemahlen und dann in einer langgestreckten Reaktionszone unter mechanischer Umwälzung für 10 bis 120 Minuten bei 600 bis 800 °C behandelt und anschließend auf eine Kornfeinheit von weniger als 1 mm aufgemahlen. Nach diesem Verfahren wird hauptsächlich $\alpha$-$Na_2Si_2O_5$ erhalten.

Die EP-A-0 502 325 beschreibt ein der EP-A-0 425 428 ähnliches Verfahren, wobei man jedoch ein sprühgetrocknetes pulverförmiges amorphes Natriumsilikat vor seinem Einbringen in den Drehrohrofen aufmahlt. Bei diesem Verfahren weist das aus dem Drehrohrofen abströmende Abgas nur einen geringen Staubgehalt auf und im Drehrohrofen ist ein höherer Füllgrad möglich.

Eine weitere Verfahrensvariante beschreibt die EP-A-0 548 599, die bei dem bereits in der EP-A-0 425 428 beschriebenen Verfahren die Änderung beinhaltet, daß man das sprühgetrocknete pulverförmige amorphe Natriumdisilikat aufmahlt und nach dem Aufmahlen in einem mit Einrichtung zur Bewegung von Feststoff ausgerüsteten, von außen über die Wand beheizten und in seinem Innenraum mehrere verschiedene Temperaturzonen aufweisenden Drehrohrofen einbringt und darin bei Temperaturen von 400 bis 800 °C für 1 bis 60 Minuten unter Bildung von kristallinem Natriumdisilikat behandelt. Erhalten wird hauptsächlich die δ-Modifikation des $Na_2Si_2O_5$.

Insgesamt weisen die vorgenannten Verfahren den Nachteil auf, daß es sehr schwierig ist, unter reproduzierbaren Bedingungen nahezu 100 %ig aus δ-Modifikation bestehendes $Na_2Si_2O_5$ herzustellen. Selbst durch eine Reihe von aufwendigen Verfahrensssschritten wird dieses Ziel nur unvollständig erreicht.

Es ist daher Aufgabe der vorliegenden Erfindung, ein Verfahren zur Verfügung zu stellen, mit dem sich kristalline Natriumsilikate mit Schichtstruktur und einem Molverhältnis von $SiO_2 : Na_2O$ von (1,9 bis 2,1): 1 reproduzierbar herstellen lassen. Dabei soll das Schichtsilikat einen möglichst hohen δ-Phasenanteil aufweisen.

Diese Aufgabe wird gelöst durch ein Verfahren der eingangs beschriebenen Art, dadurch gekennzeichnet, daß das Wasserglas vor dem Entwässern bei Temperaturen von 50 bis 140 °C behandelt wird.
Bevorzugt wird das Wasserglas 2 bis 100 Stunden behandelt.
Besonders bevorzugt wird das Wasserglas 25 bis 50 Stunden behandelt.
Bevorzugt wird das Wasserglas bei Temperaturen von 70 bis 110 °C behandelt.
Bevorzugt liegt der Feststoffgehalt des Wasserglases im Bereich von 20 bis 65 Gew.-%.
Bevorzugt wird das Wasserglas zu einem amorphen Natriumdisilikat entwässert.
Bevorzugt weist das amorphe Natriumdisilikat bei 720 °C einen Glühverlust von 10 bis 25 Gew.-% auf
Bevorzugt wird in einem Heißluftsprühturm entwässert.
Bevorzugt wird das amorphe Natriumdisilikat bei Temperaturen von mindenstens 450 °C, jedoch unterhalb seines Schmelzpunktes kristallisiert.
Bevorzugt wird die Kristallisation bei Temperaturen von 600 bis 800 °C durchgeführt.
Die Erfindung betrifft ebenfalls die Verwendung von kristallinen Schichtsilikaten hergestellt nach dem erfindungsgemäßen Verfahren zur Herstellung von Wasch-, Reinigungs- und Geschirrspülmitteln.
Bei den nachfolgenden Beispielen wird von den jeweiligen Proben ein Roentgendiffraktogramm aufgenommen und für die Berechnung der Phasenverteilung die Roentgenreflexe bei folgenden d-Werten herangezogen:

| Winkel [° 2 Theta] | d-Wert α1 [A] |
|---|---|
| 25,802 | 3,45 |
| 27,997 | 3,30 |
| 30,063 | 2,97 |
| 30,698 | 2,91 |
| 31,474 | 2,84 |
| 36,040 | 2,49 |

Die Intensitäten der Roentgenreflexe werden in an sich üblicher Weise in die nachstehenden empirisch ermittelten Formeln eingesetzt (I = Intensität, ges. = gesamt):

$$\text{Intensität (gesamt)} = I(3{,}30)+I(2{,}97) * 1{,}8+[I(3{,}45)+I(2{,}91)+I(2{,}84)+I(2{,}49)] * 1{,}89$$

$$\text{Anteil } \alpha\text{-Phase in \%} = [I(3{,}30) * 100]/\text{ges. } I$$

$$\text{Anteil } \beta\text{-Phase in \%} = [I(2{,}97) * 180]/\text{ges. } I$$

$$\text{Anteil } \delta\text{-Phase in \%} = \{[I(3{,}45)+I(2{,}91)+I(2{,}84)+I(2{,}49)] * 189\}/\text{ges. } I$$

Beispiel 1 ( Vergleichsbeispiel)

1,77 kg Quarzsand wurden mit 1,2 kg Wasser aufgeschlämmt und mit 2,2 kg 50 gew.-%iger Natronlauge versetzt. Dieses Reaktionsgemisch wurde dann in einem Rührautoklav durch Einkondensieren von 16 bar Dampf innerhalb von 70 Minuten auf 195 °C erhitzt und 110 Minuten auf dem 195 °C entsprechenden Druck gehalten. Danach wurde innerhalb von 120 Minuten entspannt und anschließend der Autoklaveninhalt klarfiltriert (Filterhilfsmittel: Kieselgur Clarcel DIC der Fa. Atochem). Es resultierte ein Wasserglas mit einem Molmodul ($SiO_2$/$Na_2O$-Verhältnis) von 2,03 und einem Feststoffgehalt von 47,2 Gew.-%. 400 g dieser Wasserglaslösung wurden in einem Laborheißluftsprühturm (Eingangstemperatur 220 °C, Abgastemperatur 120 °C) entwässert, so daß ein amorphes Natriumdisilikat mit einem Glühverlust von 17,5 Gew.-% bei 620 °C entstand. 8 g des amorphen Natriumdisilikats wurden danach 1 h in einem Muffelofen bei 620 °C getempert und anschließend rasch abgekühlt. Die für die Phasenberechnung nötigen Roentgenreflexe (Lage und Intensität) sind in Tabelle 1 dargestellt. Die prozentuale Verteilung auf die kristallinen Phasen beträgt nach oben den aufgeführten Formeln:

Anteil α-Phase: 4,5 %
Anteil β-Phase: 44,3 %
Anteil δ-Phase: 51,2 %

Beispiel 2 (Vergleichsbeispiel)

1,77 kg Quarzsand wurden mit 1,2 kg Wasser aufgeschlämmt und mit 2,2 kg 50 gew.-%iger Natronlauge versetzt. Dieses Reaktionsgemisch wurde dann in einem Rührautoklav durch Einkondensieren von 16 bar Dampf innerhalb von 80 Minuten auf 205 °C erhitzt und 90 Minuten auf dem 205 °C entsprechenden Druck gehalten. Danach wurde innerhalb von 100 Minuten entspannt und anschließend der Autoklaveninhalt wie in Beispiel 1 klarfiltriert. Es resultierte ein Wasserglas mit einem Molmodul von 2,02 und einem Feststoffgehalt von 46,7 Gew.-%. 400 g dieser Wasserglaslösung wurden in einem Laborheißluftsprühturm (Eingangstemperatur 220 °C, Abgastemperatur 120 °C) entwässert, so daß ein amorphes Natriumdisilikat mit einem Glühverlust von 16,4 Gew.-% bei 720 °C entstand. 8 g des amorphen Natriumdisilikats wurden danach 1 h in einem Muffelofen bei 720 °C getempert und anschließend rasch abgekühlt. Die für die Phasenberechnung nötigen Roentgenreflexe (Lage und Intensität) sind in Tabelle 1 dargestellt. Die prozentuale Verteilung auf die kristallinen Phasen beträgt nach oben den aufgeführten Formeln:

Anteil α-Phase: 4,8 %
Anteil β-Phase: 31,0 %
Anteil δ-Phase: 64,2 %

Beispiel 3 ( Vergleichsbeispiel)

1,44 kg Quarzsand wurden mit 1,49 kg Wasser aufgeschlämmt und mit 1,82 kg 50 gew.-%iger Natronlauge versetzt. Dieses Reaktionsgemisch wurde dann in einem Rührautoklav mit elektrischer Heizung auf 210 °C erhitzt und 90 Minuten auf dem 210 °C entsprechendem Druck gehalten. Danach wurde auf 50 °C abgekühlt und 1 h bei dieser Temperatur nachgetempert. Der Autoklaveninhalt wurde wie in Beispiel 1 klarfiltriert. Es resultierte ein Wasserglas mit einem Molmodul von 1,996 und einem Feststoffgehalt von 44,69 Gew.-%. 400g dieser Wasserglaslösung wurden in einem Laborheißluftsprühturm (Eingangstemperatur 220 °C, Abgastemperatur 120 °C) entwässert, so daß ein amorphes Natriumdisilikat mit einem Glühverlust von 15 Gew.-% bei 720 °C entstand. 8 g des amorphen Natriumdisilikats wurden danach 1 h in einem Muffelofen bei 720 °C getempert und anschließend rasch abgekühlt. Die für die Phasenberechnung nötigen Roentgenreflexe (Lage und Intensität) sind in Tabelle 1 dargestellt. Die prozentuale Verteilung auf die 3 kristallinen Phasen beträgt nach den oben aufgeführten Formeln:

Anteil α-Phase: 17,6 %
Anteil β-Phase: 42,6 %
Anteil δ-Phase: 39,8 %

Beispiel 4 (gemäß der Erfindung)

1,77 kg Quarzsand wurden mit 1,2 kg Wasser aufgeschlämmt und mit 2,2 kg 50 gew.-%iger Natronlauge versetzt. Dieses Reaktionsgemisch wurde dann in einem Rührautoklav durch Einkondensieren von 16 bar Dampf innerhalb von 70 Minuten auf 195 °C erhitzt und 110 Minuten auf dem 195 °C entsprechenden Druck gehalten. Danach wurde innerhalb von 120 Minuten entspannt und anschließend der Autoklaveninhalt wie in Beispiel 1 klarfiltriert. Es resultierte ein Wasserglas mit einem Molmodul von 2,03 und einem Feststoffgehalt von 47,2 Gew.-%. Die Wasserglaslösung wurde in Anschluß 48 h bei 110 °C nachgetempert. 400 g dieser nachgetemperten Wasserglaslösung wurden in einem Laborheißluftsprühturm (Eingangstemperatur 220 °C, Abgastemperatur 120 °C) entwässert, so daß ein amorphes Natriumdisilikat mit einem Glühverlust von 16,2 Gew.-% bei 620 °C entstand. 8 g des amorphen Natriumdisilikats wurden danach 1 h in einem Muffelofen bei 620 °C getempert und anschließend rasch abgekühlt. Die für die Phasenberechnung nötigen Roentgenreflexe (Lage und Intensität) sind in Tabelle 1 dargestellt. Die prozentuale Verteilung auf die kristallinen Phasen beträgt nach den oben aufgeführten Formeln:

Anteil α-Phase: 1,0 %
Anteil β-Phase: 5,5 %
Anteil δ-Phase: 93,5 %

Beispiel 5 (gemäß der Erfindung)

1,77 kg Quarzsand wurden mit 1,2 kg Wasser aufgeschlämmt und mit 2,2 kg 50 gew.-%iger Natronlauge versetzt. Dieses Reaktionsgemisch wurde dann in einem Rührautoklav durch Einkondensieren von 16 bar Dampf innerhalb von 80 Minuten auf 205 °C erhitzt und 90 Minuten auf dem 205 °C entsprechenden Druck gehalten. Danach wurde innerhalb von 100 Minuten entspannt und anschließend der Autoklaveninhalt wie in Beispiel 1 klarfiltriert. Es resultierte ein Wasserglas mit einem Molmodul von 2,02 und einem Feststoffgehalt von 46,7 Gew.-%. Die Wasserglaslösung wurde im Anschluß 48 h bei 110 °C nachgetempert. 400 g dieser Wasserglaslösung wurden in einem Laborheißluftsprühturm (Eingangstemperatur 220 °C, Abgastemperatur 120 °C) entwässert, sodaß ein amorphes Natriumdisilikat mit einem Glühverlust von 16,6 Gew.-% bei 720 °C entstand. 8 g des amorphen Disilikats wurden danach 1 h in einem Muffelofen bei 720 °C getempert und anschließend rasch abgekühlt. Die für die Phasenberechnung nötigen Roentgenreflexe (Lage und Intensität) sind in Tabelle 1 dargestellt. Die prozentuale Verteilung auf die kristallinen Phasen beträgt nach den oben aufgeführten Formeln:

Anteil α-Phase: 1,1 %
Anteil β-Phase: 0,0 %
Anteil δ-Phase: 98,9 %

Beispiel 6 ( gemäß der Erfindung)

Ein Wasserglas hergestellt wie in Beispiel 3 wurde anschließend 48 h bei 110 °C nachgetempert. 400 g dieser nachgetemperten Wasserglaslösung wurden in einem Laborheißluftsprühturm (Eingangstemperatur 220 °C, Abgastemperatur 120 °C) entwässert, so daß ein amorphes Natriumdisilikat mit einem Glühverlust von 16 Gew.-% bei 720 °C entstand. 8 g des amorphen Natriumdisilikats wurden danach 1 h in einem Muffelofen bei 720 °C getempert und anschließend rasch abgekühlt. Die für die Phasenberechnung nötigen Roentgenreflexe (Lage und Intensität ) sind in Tabelle 1 dargestellt. Die prozentuale Verteilung auf die 3 kristallinen Phasen beträgt nach den oben aufgeführten Formeln:

Anteil α-Phase: 6,8%
Anteil β-Phase: 8,2%
Anteil δ-Phase: 85,0 %

Beispiele 7 bis 19

Die Beispiele 7 bis 19 wurden wie Beispiel 2 ausgeführt, wobei die Daten in der Tabelle 2 zu Beispiel 7 sich auf reines Wasserglas beziehen.

Tabelle 1 :

| Roentgenreflexe zu den Beispielen 1 bis 6 | | | | | | |
|---|---|---|---|---|---|---|
| Beispiel | Intensität rel [%] bei dα1 3,45 | Intensität rel [%] bei dα1 3,30 | Intensität rel [%] bei dα1 2,97 | Intensität rel [%] bei dα1 2,91 | Intensität rel [%] bei dα1 2,84 | Intensität rel [%] bei dα1 2,49 |
| 1 | 6,9 | 6,6 | 36 | 8,5 | 12,8 | 11,5 |
| 2 | 6,9 | 6,2 | 22,2 | 9,2 | 15,5 | 12,1 |
| 3 | 6,1 | 29,9 | 40,2 | 7,3 | 13,7 | 8,7 |
| 4 | 8,6 | 1 | 3 | 10,2 | 17,2 | 13,1 |
| 5 | 9,9 | 1,1 | 0 | 11,6 | 17,7 | 13,8 |
| 6 | 9,1 | 7,7 | 5,2 | 10,7 | 17,9 | 13,1 |

Tabelle 2 :

| Daten zu den Beispielen 7 bis 19 | | | | | | | | |
|---|---|---|---|---|---|---|---|---|
| Beispiel | Nachbehandl.-Temperatur [°C] | Nachbehandl.-Zeit [h] | Anteil α-Phase [620°C] | Anteil β-Phase [620°C] | Anteil δ-Phase [620°C] | Anteil α-Phase [720°C] | Anteil β-Phase [720°C] | Anteil δ-Phase [720°C] |
| 7 | (Wasserglas original) | | 4,5 | 44,3 | 51,2 | 8,4 | 25,4 | 66,1 |
| 8 | 50 | 2 | 5,6 | 43,8 | 50,5 | 11,3 | 15,5 | 73,2 |
| 9 | 50 | 25 | 4,3 | 22,1 | 73,6 | 3,6 | 24,5 | 71,9 |
| 10 | 50 | 48 | 4,4 | 19,5 | 76,2 | 7,4 | 5,3 | 87,3 |
| 11 | 80 | 2 | 9,2 | 33,2 | 57,6 | 11,3 | 14,3 | 74,4 |
| 12 | 80 | 25 | 5,9 | 32,7 | 61,4 | 5,7 | 11,7 | 82,6 |
| 13 | 80 | 25 | 6,4 | 24,8 | 68,9 | 7,2 | 21,3 | 71,5 |
| 14 | 80 | 25 | 6,2 | 25,6 | 68,3 | 7,8 | 15,9 | 76,3 |
| 15 | 80 | 25 | 6 | 23,7 | 70,3 | 8,8 | 19,2 | 72 |
| 16 | 80 | 48 | 7,3 | 21,3 | 71,4 | 10,7 | 13 | 76,3 |
| 17 | 110 | 2 | 4,6 | 19,4 | 76 | 4 | 9,5 | 86,5 |
| 18 | 110 | 25 | 1,7 | 9,1 | 89,2 | 5,2 | 0 | 94,8 |
| 19 | 110 | 48 | 1 | 5,5 | 93,5 | 4,2 | 0 | 95,8 |

## Patentansprüche

1. Verfahren zur Herstellung von kristallinen Natriumsilikaten mit Schichtstruktur und hohem δ-Phasenanteil aus hydrothermal hergestelltem Wasserglas durch Entwässern des Wasserglases und anschließender Kristallisation bei erhöhter Temperatur, dadurch gekennzeichnet, daß das Wasserglas vor dem Entwässern bei Temperaturen von 50 bis 140 °C behandelt wird.

2. Verfahren nach Anspruch 1, dadurch gekennzeichnet, daß das Wasserglas 2 bis 100 Stunden behandelt wird.

3. Verfahren nach Anspruch 1 oder 2, dadurch gekennzeichnet, daß das Wasserglas 25 bis 50 Stunden behandelt wird.

4. Verfahren nach mindestens einem der Ansprüche 1 bis 3, dadurch gekennzeichnet, daß das Wasserglas bei Temperaturen von 70 bis 110 °C behandelt wird.

5. Verfahren nach mindestens einem der Ansprüche 1 bis 4, dadurch gekennzeichnet, daß der Feststoffgehalt des Wasserglases im Bereich von 20 bis 65 Gew.-% liegt.

6. Verfahren nach mindestens einem der Ansprüche 1 bis 5, dadurch gekennzeichnet, daß das Wasserglas zu einem amorphen Natriumdisilikat entwässert wird.

7. Verfahren nach Anspruch 6, dadurch gekennzeichnet, daß das amorphe Natriumdisilikat bei 720 °C einen Glühverlust von 10 bis 25 Gew.-% aufweist.

8. Verfahren nach mindestens einem der Ansprüche 1 bis 7, dadurch gekennzeichnet, daß in einem Heißluftsprühturm entwässert wird.

9. Verfahren nach mindestens einem der Ansprüche 1 bis 8, dadurch gekennzeichnet, daß das amorphe Natriumdisilikat bei Temperaturen von mindenstens 450 °C, jedoch unterhalb seines Schmelzpunktes kristallisiert wird.

10. Verfahren nach mindestens einem der Ansprüche 1 bis 9, dadurch gekennzeichnet, daß die Kristallisation bei Temperaturen von 600 bis 800 °C durchgeführt wird.

## Claims

1. A process for the preparation of crystalline sodium silicates having a sheet structure and high δ phase content from water glass, which has been prepared hydrothermally, by dehydration of the water glass and subsequent crystallization at elevated temperature, which comprises treating the water glass at temperatures of from 50 to 140°C prior to dehydration.

2. The process as claimed in claim 1, which comprises treating the water glass for from 2 to 100 hours.

3. The process as claimed in claim 1 or 2, which comprises treating the water glass for from 25 to 50 hours.

4. The process as claimed in at least one of claims 1 to 3, which comprises treating the water glass at temperatures of from 70 to 110°C.

5. The process as claimed in at least one of claims 1 to 4, wherein the solids content of the water glass is in the range from 20 to 65% by weight.

6. The process as claimed in at least one of claims 1 to 5, which comprises dehydrating the water glass to give an amorphous sodium disilicate.

7. The process as claimed in claim 6, wherein the amorphous sodium disilicate has an ignition loss of from 10 to 25% by weight at 720°C.

8. The process as claimed in at least one of claims 1 to 7, which comprises carrying out the dehydration in a hot-air spray tower.

9. The process as claimed in at least one of claims 1 to 8, which comprises crystallizing the amorphous sodium disilicate at temperatures of at least 450°C, but below its melting point.

10. The process as claimed in at least one of claims 1 to 9, which comprises carrying out the crystallization at temperatures of from 600 to 800°C.

## Revendications

1. Procédé de préparation de silicates de sodium cristallins de structure lamellaire et ayant une proportion élevée de phase δ à partir de verre soluble préparé par voie hydrothermale par déshydratation du verre soluble et ensuite cristallisation à température élevée, caractérisé en ce que, le verre soluble est traité avant la déshydratation à des températures comprises entre 50 et 140°C.

2. Procédé selon la revendication 1, caractérisé en ce que le verre soluble est traité pendant 2 à 100 heures.

3. Procédé selon la revendication 1 ou 2, caractérisé en ce que le verre soluble est traité pendant 25 à 50 heures.

4. Procédé selon au moins une des revendications 1 à 3, caractérisé en ce que le verre soluble est traité à des températures comprises entre 70 et 110°C.

5. Procédé selon au moins une des revendications 1 à 4, caractérisé en ce que la teneur en matière solide du verre soluble se situe dans la gamme comprise entre 20 et 65% en poids.

6. Procédé selon au moins une des revendications 1 à 5, caractérisé en ce que le verre soluble est déshydraté pour donner un bisilicate de sodium amorphe.

7. Procédé selon la revendication 6, caractérisé en ce que le bisilicate de sodium amorphe présente à 720°C une perte au feu de 10 à 25% en poids.

8. Procédé selon au moins une des revendications 1 à 7, caractérisé en ce que le produit est déshydraté dans une tour de pulvérisation à air chaud.

9. Procédé selon au moins une des revendications 1 à 8, caractérisé en ce que le bisilicate de sodium amorphe est cristallisé à des températures d'au moins 450°C, mais au-dessous de son point de fusion.

10. Procédé selon au moins une des revendications 1 à 9, caractérisé en ce que la cristallisation est effectuée à des températures comprises entre 600 et 800°C.